# EUROPEAN PATENT APPLICATION

(11) **EP 3 366 115 A1**
(43) Date of publication of application: **29.08.2018**
(21) Application number: 18158189.3
(22) Date of filing: 22.02.2018
(51) Int. Cl.: A01G 13/02, C08J 3/22, C08J 5/18, C08L 23/06

(54) **AGRICULTURAL FILM FORMULATION, AGRICULTURAL FILM AND PREPARATION METHOD THEREOF**

(30) Priority: 22.02.2017 TW 106106008
(71) Applicant: Taiwan Gins Leader Machinery Co., Ltd, Tainan City 710 (TW)
(72) Inventor: CHAO, Chin-Te, Tainan City 710 (TW)
(74) Representative: J A Kemp

(57) **Abstract**

The present invention provides an agricultural film formulation, which comprises about 40 wt% to about 70 wt% inorganic mineral powder, about 15 wt% to about 30 wt% high-density polyethylene, about 8 wt% to about 20 wt% low-density polyethylene, about 5 wt% to about 10 wt% biodegradable plastic, and an optional auxiliary agent, based on total weight of the formulation. The present invention also provides an agricultural mulch film made from the agricultural film formulation and a preparation method thereof.

## Description

### Field of the Invention

The present invention relates to an agricultural film formulation and particularly to an agricultural mulch film made from the agricultural film formulation and a preparation method thereof.

### Description of the Prior Art

Agricultural mulch film covering cultivation technology is a fast effective and high-yielding agricultural measure. Mulch films can provide a number of benefits to crops, such as the regulation of soil temperature, the control of weed growth, the prevention of water loss, the prevention of agrochemical leaching, the protection of leaves and fruits from possible soil diseases, the protection of fruits from soil dirt, preventing the upper layer of soil from crusting, and the reduction of herbicide and pesticide use and frost protection.

Most of the currently available agricultural mulch films are made from about 90% or more, or even about 100% low-density polyethylene (LDPE), and thus are very durable, are difficult to be broken, and can be reused many times. However, in order to reduce costs, some farmers will use thin plastic mulch films, such as having a thickness of about 8 µm, about 10 µm, or about 12 µm, but these films are too thin to be reused and recycled. The abandoned thin mulch films will be discarded anywhere and everywhere, and cannot decompose for a long time, thus causing serious environmental problems. For large-scale farms, recycling mulch films is time-consuming and expensive due to high labor cost. Furthermore, the used mulch films are usually contaminated with pesticides, soil and crop residues, and have to be washed using large amounts of water before they are reused. An economic way is to break the mulch films into fragments and mix the fragments with soil when loosing soil by a cultivator. However, a huge portion of agricultural plastics wastes were left on the field. This situation would lead to the release of dangerous substances with a negative environmental impact. Moreover, burying mulch films in agricultural land represents a forthcoming threat for an irreparable soil contamination and also possibly for the safety of the food produced in such fields. In addition, if the waste film fragments left on the field were accidentally eaten by livestock, their health will be endangered and may cause them death.

In order to avoid the aforementioned problems, various degradable films, such as photodegradable films, oxo-degradable films, and starch-filled mulch films, have been developed. However, the main ingredient of these films is still polyethylene, so even if they can be cracked and broken into fragments and then buried in soil, they still cannot be completely decomposed and absorbed.

Given the above, the benefits of using agricultural mulch films lead to an improvement in yield and quality parameters of crops. However, the massive use of agricultural plastics raises a number of challenges mainly at the end of cycle management. There is a need to develop a new and improved agricultural mulch film which has excellent properties, can effectively solve the above conventional problems, can be widely used, can be easy to be prepared and operate, is environmentally friendly, and can reduce cost, so as to meet the current market demand.

### Summary of the Invention

After a large amount of research, the inventors successfully developed a novel and improved agricultural film formulation that can be used to prepare an environmentally friendly agricultural mulch film and can significantly reduce the production cost.

It is a principle object of this invention to provide an agricultural film formulation, which comprises about 40 wt% to about 70 wt% inorganic mineral powder, about 15 wt% to about 30 wt% high-density polyethylene, about 8 wt% to about 20 wt% low-density polyethylene, about 5 wt% to about 10 wt% biodegradable plastic, and optionally an auxiliary agent, based on total weight of the formulation.

Another object is to provide an agricultural mulch film made from the aforementioned agricultural film formulation, which has a thickness of about 6 µm to about 15 µm and a density of about 0.6 g/cm³ to about 0.85 g/cm³.

Still another object is to provide a method for preparing a mulch film, which comprises internal mixing the aforementioned agricultural film formulation to form a composite soft material; pelletizing the composite soft material to be one or more composite pellets; molding one of the composite pellets to be a film tube; blowing the film tube so as to allow the film tube to extend outward and expand to a predetermined dimension; and squeezing and flattening the film tube into the mulch film.

### Brief description of the Drawings

Fig. 1 illustrates a schematic diagram of the processing equipment for preparing the agricultural mulch film according to an embodiment of the present invention, wherein (a) shows a top view and (b) shows a front side view.
Fig. 2 illustrates a schematic diagram showing the molding of the film tube according to an embodiment of the present invention.

### Detailed Description

In this context, unless otherwise limited, a singular term (such as "a") also includes a plural form thereof. In this context, all embodiments and exemplary terms (for example, "such as") only aim at making the present invention more prominent, but are not intended to limit the scope of the present invention; the terms used in this specification should not be construed as implying that any component not claimed may form a necessary component for implementing the present invention.

The agricultural film formulation of the present invention mainly comprises inorganic mineral powder, high-density polyethylene, low-density polyethylene, biodegradable plastic, and an optional auxiliary agent.

In the present invention, the inorganic mineral powder is used to replace a portion of plastic materials. In other words, the use of the inorganic mineral powder in the agricultural film formulation can reduce the amount of the plastic materials and further increases the decomposition effects of the agricultural mulch film. Therefore, the agricultural mulch film of the present invention can be buried directly in soil (e.g., together with crop residues), thus no removal from the field is required at the end of crop cycle. After the agricultural mulch film of the present invention is decomposed, the residues of the inorganic mineral powder are easy to be accepted by the environment since the inorganic minerals are almost natural substances.

According to one embodiment of the present invention, the inorganic mineral powder includes, but is not limited to, calcium carbonate, limestone milling powder, loess milling powder, lime soil milling powder, magnesium carbonate, talc powder, calcium sulfate, barium sulfate, kaolin, mica powder, zinc oxide, dolomite powder, calcium silicate, glass fibers, hollow glass beads, silica powder, chalk powder, titanium dioxide, silicon dioxide, bentonite, white clay, diatomaceous earth, or combinations thereof. The inorganic mineral powder that is suitable for use in the present invention can be calcined or non-calcined. The inorganic mineral powder is preferably selected from non-calcined calcium carbonate, limestone milling powder, loess milling powder, lime soil milling powder, and combinations thereof. In an embodiment, the inorganic mineral powder has an average particle size of about 1 µm to about 5 µm, about 1 µm to about 4 µm, about 1 µm to about 3 µm, or about 1 µm to about 2 µm. Preferably, the inorganic mineral powder comprises at least about 80%, about 85% or about 90% inorganic mineral powder having an average particle size of about 1 µm to about 2 µm, or comprises at least about 95% or about 100% inorganic mineral powder having an average particle size of about 1 µm to about 4 µm. The aforementioned amounts and average particle sizes should be considered to have disclosed all subranges and can be any value.

In the formulation of the present invention, the inorganic mineral powder can be present in an amount of about 40 wt% to about 70 wt%, about 42 wt% to about 68 wt%, about 45 wt% to about 65 wt%, about 48 wt% to about 60 wt%, about 50 wt% to about 58 wt%, about 52 wt% to about 55 wt%, about 47 wt% to about 62 wt%, or about 53 wt% to about 67 wt%, based on the total weight of the formulation. The aforementioned amounts should be considered to have disclosed any subranges and can be all value.

According to one embodiment of the present invention, the combination of high-density polyethylene and low-density polyethylene is used as a portion of the polyester materials. In the present invention, the high-density polyethylene refers to polyethylene having a relative density of higher than about 0.930 g/cm³, preferably polyethylene having a relative density ranging from about 0.940 g/cm³ to about 0.975 g/cm³. In one embodiment, the high-density polyethylene comprises blown-film grade high-density polyethylene. In the formulation of the present invention, the high-density polyethylene can be present in an amount of about 15 wt% to about 30 wt%, about 18 wt% to about 28 wt%, about 20 wt% to about 26 wt%, about 22 wt% to about 24 wt%, or about 25 wt% to about 28 wt%, based on the total weight of the formulation. The aforementioned amounts should be considered to have disclosed any subranges and can be all value.

In the present invention, the low-density polyethylene refers to polyethylene having a relative density of less than about 0.930 g/cm³, preferably polyethylene having a relative density ranging from about 0.910 g/cm³ to about 0.930 g/cm³. In one embodiment, the high-density polyethylene comprises blown-film grade low-density polyethylene. In the formulation of the present invention, the low-density polyethylene can be present in an amount of about 8 wt% to about 20 wt%, about 9 wt% to about 18 wt%, about 10 wt% to about 16 wt%, about 11 wt% to about 15 wt%, or about 12 wt% to about 14 wt%, based on the total weight of the formulation. The aforementioned amounts should be considered to have disclosed any subranges and can be all value.

According to one embodiment of the present invention, the biodegradable plastic material is used as a portion of the plastic materials, thereby further increasing the decomposition effects of the agricultural mulch films. The biodegradable plastic that is suitable for use in the present invention includes, but is not limited to, polylactide (PLA), blown-film grade polycaprolactone (PCL), blown-film grade polyhydroxybutyrate, or combinations thereof. In the formulation of the present invention, the biodegradable plastic can be present in an amount of about 5 wt% to about 10 wt%, about 6 wt% to about 8 wt%, or about 7 wt% to about 9 wt%, based on the total weight of the formulation. The aforementioned amounts should be considered to have disclosed any subranges and can be all value.

In the present invention, the agricultural film formulation can optionally comprise an auxiliary agent so as to improve the desired properties of the formulation and film. In an embodiment, the auxiliary agent includes, but is not limited to, a slip agent (dispersant), a coupling agent, or a combination thereof. The slip agent can be calcium stearate, zinc stearate, magnesium stearate, N-oleyl palmitamide, or combinations thereof. The coupling agent can be β-(3,4-epoxycyclohexyl) ethyltrimethoxysilane. According to one embodiment of the present invention, the auxiliary agent can be present in an amount of about 0.5 wt% to about 1 wt%, about 0.5 wt% to about 1.5 wt%, about 0.5 wt% to about 2 wt%, about 0.5 wt% to about 2.5 wt%, about 0.5 wt% to about 3 wt%, about 0.5 wt% to about 3.5 wt%, about 0.5 wt% to about 4 wt%, about 0.5 wt% to about 4.5 wt%, about 0.5 wt% to about 5 wt%, or about 0.5 wt% to about 5.5 wt%; preferably about 1 wt% to about 3 wt%; and particular preferably about 1 wt% to about 2 wt%, based on the total weight of the formulation. The aforementioned amounts should be considered to have disclosed any subranges and can be all value.

According to another embodiment of the present invention, the agricultural film formulation can optionally comprise organic grain powder, in order to further accelerate the decomposition speed of the agricultural mulch film. The organic grain powder that is suitable for use in the present invention is known in the art, and includes, but is not limited to, corn flour, tapioca flour, sweet potato flour, sorghum flour, wheat flour, or combinations thereof. In the formulation of the present invention, the organic grain powder can be present in an amount of about 1 wt% to about 20 wt%, about 2 wt% to about 18 wt%, about 5 wt% to about 15 wt%, about 8 wt% to about 12 wt%, or about 3 wt% to about 10 wt%, based on the total weight of the composite film. The aforementioned amounts should be considered to have disclosed any subranges and can be all value.

In an embodiment of the present invention, the agricultural film formulation comprises about 40 wt% to about 65 wt% inorganic mineral powder, about 15 wt% to about 30 wt% high-density polyethylene, about 8 wt% to about 20 wt% low-density polyethylene, about 5 wt% to about 10 wt% polylactide, and about 1 wt% to about 2 wt% an auxiliary agent, based on the total weight of the formulation.

In another embodiment of the present invention, the agricultural film formulation comprises at least about 55 wt% inorganic mineral powder, about 25 wt% to about 28 wt% high-density polyethylene, about 10 wt% low-density polyethylene, about 5 wt% to about 10 wt% biodegradable plastic, and about 2 wt% an auxiliary agent, based on the total weight of the formulation.

In the present invention, the aforementioned agricultural film formulation is used to form a mulch film, especially an environmentally friendly agricultural mulch film which can be cracked when exposed to light or sunlight. When the agricultural mulch film of the present invention is placed on farmland and exposed to sunlight, the film will be heated to a temperature of about 65°C or higher due to the infrared radiation on the fine inorganic mineral powder. The plastic materials in the film will be constantly evaporated so as to reduce oiliness therein. At the same time, the inorganic mineral powder will become expanded by heat so as to lead to and accelerate the rupture of the film. Moreover, since the ultraviolet light in sunlight has strong penetration ability, the molecular chain of the plastic materials will be destroyed so that the plastic materials will be fractured and embrittled. Under the double-destroy situations, the agricultural mulch film of the present invention can be decomposed quickly, the natural mineral powder can return to farmland, and the plastic materials have become cured and have no plasticity, and the film will be easily cracked and broken with only a gentle touch. Therefore, at the end of each crop cycle, a cultivator can be used to loosen soil and simultaneously break the used mulch film into small fragments. The mulch films need not be recycled so as to significantly reduce the labor cost.

The decomposition velocity of the agricultural mulch film can be controlled depending on the length of the growth cycle and the types of the crops by adjusting the species and/or proportions of the raw materials of the formulation. The agricultural mulch film can be adjusted to have a suitable density and/or thickness, so that it can be cracked and broken into small fragments within a predetermined time of harvesting the crops. Typically, the growth cycle of crops is about four months to about six months, so the agricultural mulch films are usually designed to be cracked and broken within about two months to about six months. In one embodiment of the present invention, the agricultural mulch film can be cracked and broken into small fragments within about two months when exposed to natural sun radiation, and the plastic materials will become cured within about three months. In another embodiment of the present invention, the agricultural mulch film having a thickness of about 10 µm will be cracked within about three months under UV radiation and will become cured products having no plasticity which can be easily broken with only a gentle touch.

According to one embodiment, the agricultural mulch film can be preferably designed to have a thickness of about 6 µm to about 15 µm, about 7 µm to about 14 µm, about 8 µm to about 13 µm, about 9 µm to about 12 µm, or about 10 µm to about 11 µm, and/or has a density of about 0.6 g/cm³ to about 0.85 g/cm³, about 0.62 g/cm³ to about 0.82 g/cm³, about 0.65 g/cm³ to about 0.8 g/cm³, about 0.67 g/cm³ to about 0.78 g/cm³, about 0.7 g/cm³ to about 0.76 g/cm³, or about 0.72 g/cm³ to about 0.75 g/cm³, as needed. The aforementioned thickness or density should be considered to have disclosed any subranges and can be all value.

In the present invention, the method of preparing an agricultural mulch film comprises the steps of:
(1) internally mixing: internal mixing the aforementioned agricultural film formulation to be a composite soft material;
(2) pelletizing: pelletizing the composite soft material to be one or more composite pellets;
(3) preforming: molding one of the composite pellets to be a film tube;
(4) film blowing: blowing the film tube so as to allow the film tube to extend outward and expand to a predetermined dimension; and
(5) molding: squeezing and flattening the film tube into the mulch film.

In an embodiment, the method of preparing the agricultural mulch film comprises the steps including, but not limited to:
(1-1) mixing the ingredients of the agricultural film formulation at a temperature of about 120°C to about 160°C, preferably about 125°C to about 140°C;
(1-2) heating to a temperature of about 140°C to about 180°C, preferably about 160°C to about 170°C, to melt the high-density polyethylene, low-density polyethylene, and the biodegradable plastic, and internally mixing the melt with the inorganic mineral powder to form the composite soft material;
(2-1) introducing the composite soft material into a pelletizing machine to form the one or more composite pellets;
(3-1) introducing one of the composite pellet into an extruder with a circular die nozzle and softening the composite pellet at a temperature of about 120°C to about 170°C, preferably about 140°C to about 160°C;
(3-2) extruding the softened composite pellet from the circular die nozzle to form the film tube;
(4-1) cooling the film tube to a temperature of about 100°C to about 130°C, preferably using cold air to cool the film tube to a temperature of about 100°C to about 130°C or about 110°C to about 120°C, wherein the distance for cooling (i.e., the shaping distance) is about 4 times to about 8 times, about 5 times to about 7 times, or about 4 times to about 7.5 times the diameter of the circular die nozzle, and wherein the diameter of the circular die nozzle can be selected as needed, for example, but not limited to, about 150 mm to about 350 mm or about 200 mm to about 300 mm, preferably about 250 mm;
(4-2) blowing the cooled film tube so as to allow the film tube to extend outward and expand to become a large cylindrical shape having a diameter of about 4 times to about 8 times, about 5 times to about 7 times, or about 4 times to about 7.5 times the diameter of the circular die nozzle;
(5-1) squeezing and flattening the extended and expanded film tube by using rollers of a molding machine to form a two-layer sheet; and
(5-2) cutting the two-layer sheet into two single-layer mulch films.

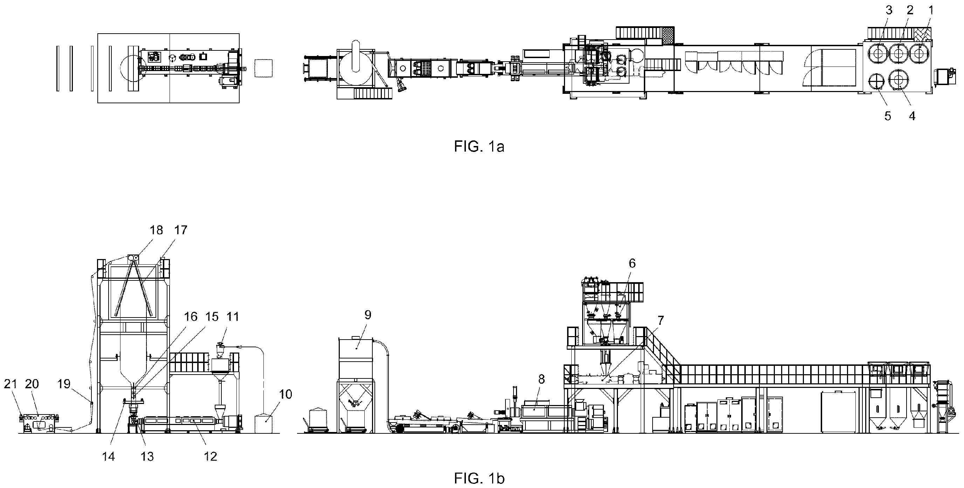

Fig. 1 illustrates a schematic diagram of the processing equipment for preparing the agricultural mulch film according to an embodiment of the present invention, wherein (a) shows a top view and (b) shows a front side view.

Please refer to Fig. 1(a) and Fig. 1(b). In Step (1), the five raw materials, i.e., the inorganic mineral powder 1, the high-density polyethylene 2, the low-density polyethylene 3, the polylactide 4, and the auxiliary agent 5 in their storage tanks are separately and continuously fed to an inlet of an internal mixer 7 in respective proportions by using five sets of screws of a five-in-one automatic controlling system 6. The mixture is heated to about 120°C to about 160°C, preferably about 125°C to about 140°C, at the first heating stage in the first-stage internal mixer, is stirred uniformly, and then heated to about 140°C to about 180°C, preferably about 160°C to about 170°C at the second heating stage in the second-stage internal mixer. During the heating processes, the high-density polyethylene, the low-density polyethylene, and the polylactide resin are melted to be a hot melt plastic material, and then the hot melt plastic material is uniformly mixed with the inorganic mineral powder. Thereafter, the mixture is squeezed and kneaded to form a composite soft material, and the composite soft material is discharged from an outlet of the internal mixer 7 to an inlet of the extrusion pelletizing machine 8.

In Step (2), the composite soft material is introduced into an inlet of the extrusion pelletizing machine 8, and then extruded into a pellet manufacturing module by screws of an extruder so as to form one or more composite pellets. The obtained composite pellets are placed in the composite pellet storage tanks 9 and 10.

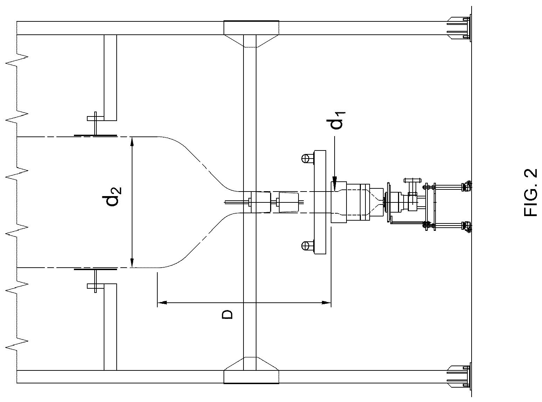

In Step (3), one of the composite pellets in the storage tank is fed into an inlet of the mulch film forming extruder 12 by using an automatic suction machine 11. The composite pellet is softened by controlling the temperature of a screw barrel of the extruder to about 120°C to about 170°C, preferably about 140°C to about 160°C. The softened composite pellet is extruded by using a screw into a circular die nozzle 13 and is discharged from the circular die nozzle so as to form a hollow film tube 16 in a cylindrical shape. Please also refer to Fig. 2, which illustrates a schematic diagram of the molding of the agricultural film tube according to an embodiment of the present invention. The details will be discussed in the following sections.

In Step (4), the film tube is cooled to a temperature of about 100°C to about 130°C by using cold air from a cooling air ring 14, wherein the distance for cooling (i.e., the cooling line length or the shaping distance) can be optionally adjusted as needed. Typically, the distance for cooling is about 4 times to 8 times or about 5 times to about 7 times the diameter of the circular die nozzle from the planar of the circular die nozzle. Then, cold air is introduced to blow up the cooled film tube 16 to allow the film tube to extend outward and expand to become a large cylindrical shape with a predetermined dimension, wherein the predetermined dimension can be adjusted as needed. Typically, the large cylindrical shape has a diameter of about 4 times to about 8 times or about 5 times to about 7 times the diameter of the circular die nozzle. The film blowing step includes, but is not limited to, sealing the top of the film tube and stretching it upward; blowing air, preferably high-pressure air, into the film tube to expand the film tube like a balloon. The diameter of the film tube becomes larger but the thickness becomes thinner. The dimension and thickness of the expanded film tube can be controlled by changing the volume and speed of air introduced.

In Step (5), the expanded film tube is squeezed and flattened by using two rows of rollers 17 of a molding machine below the take-off rollers 18 to form a two-layer sheet. The thickness of the sheet can be controlled by adjusting the speed of these rollers. Then, the two-layer sheet is drawn to the underlying winding station and is cut by using a cutting device 19 into two single-layer films, which can be used as agricultural mulch films.

The method of the present invention can optionally comprise a winding step, which includes, but is not limited to, drawing each of the two single-layer films to a double-sided surface coiler 20 to take up the film roll so as to form an agricultural film product 21.

The preparation method of the present invention can be operated by only placing the five raw materials in their storage tanks, so that the raw materials can be automatically fed in proportionate quantities so as to continuously form the desired agricultural mulch film. The method of the present invention can significantly save human efforts and energy, and thus meets the environmental requirement.

In the present invention, the agricultural mulch film can be adjusted to have any desirable thickness and density, preferably having a thickness of about 6 µm to about 15 µm and a density of about 0.6 g/cm³ to about 0.85 g/cm³, such that the same amounts of the raw materials can be used to prepare an agricultural mulch film with larger surface area so as to reduce the production cost. The agricultural mulch film can be cut or processed by any methods so as to have a desirable shape or color.

In an embodiment of the present invention, the film blowing apparatus mainly includes, but is not limited to, raw material storage tanks, a raw material automatic controlling/measure system, an internal mixer, an extrusion pelletizing machine, composite material storage tanks, an automatic suction machine, an extruder, a film blowing machine, roller set and take-off rollers of the molding machine, a cutting device, and a surface coiler, etc.

Fig. 2 illustrates a schematic diagram of the molding of the agricultural film tube according to an embodiment of the present invention. As shown in Fig. 2, since the high-density polyethylene is used as a portion of the plastic materials, the shaping distance D for film blowing is sufficient long so that the processing conditions can be adjusted as needed. Moreover, the diameter (d₁) of the circular die nozzle for use in the film blowing apparatus is smaller than the conventional ones so that the obtained film tube has a large blow-up ratio (i.e., the diameter of film tube (d₂)/ the diameter of die nozzle (d₁)), thereby forming the film tube and the agricultural film with higher mechanical strength.

Given the above, the agricultural mulch film prepared from the specific formulation of the present invention is environmentally friendly, can be decomposed more quickly, can be used widely, has the benefits such as the regulation of soil temperature, the control of weed growth, and the prevention of water loss as the conventional ones, and can further prevent environment pollution, especially soil pollution. The agricultural mulch film of the present invention can be effectively and easily cracked and broken within a predetermined period, so the film residues can simply be plowed into the soil at the end of a crop cycle. The use of the agricultural mulch film of the present invention does not affect the growth of crops, meets the environment requirement, is cost and labor efficient, and is easy to operate.

The following embodiments are used to further describe the present invention and do not limit the scope of the present invention. All modifications and variations, which can be easily made by any persons of skill in the art, fall within the disclosure of this specification and the scope of the appended claims.

### Examples

### Preparation Example 1

Five materials of inorganic mineral powder, high-density polyethylene (HDPE), low-density polyethylene (LDPE), polylactate (PLA), and an auxiliary agent were respectively pumped under negative pressure through five different stainless pipes into five different storage tanks for inorganic mineral powder, HDPE, LDPE, PLA, and an auxiliary agent. The formulation comprises about 60 kg inorganic mineral powder, about 22 kg HDPE, about 10 kg LDPE, about 6 kg PLA, and about 2 kg auxiliary agent, and the total weight of the formulation is about 100 kg.

A predetermined amount of each raw material was separately transferred by digitally weighting and controlling five sets of screws, and the five materials were all fed to an inlet of an internal mixer for preparing a composite soft material. The feeds were continuously supplied. The five materials were supplied in a total amount of about 1200 kg per hour. The internal mixer was continuously operating, and the rotational speed of two rotors of the internal mixer was digitally controlled to be about 280 rotations per minute (rpm). In the first stage of the internal mixer, the heating temperature was digitally controlled at about 140°C, and in the second stage of the internal mixer, the heating temperature was digitally controlled at about 160°C. The discharge amount of the composite soft material from the internal mixer was about 1200 kg per hour. The discharge was then fed into a pelletizing machine to form a plurality of composite pellets having a diameter of about 4 mm and a length of about 3 mm to about 4 mm.

The composite pellets were separately introduced into a mulch film forming extruder, in which the temperature of a screw barrel was adjusted to about 140°C at the first stage, about 145°C at the second stage, and about 150°C at the third to the fifth stages. The composite pellet was continuously extruded by a screw and discharged from the circular die nozzle so as to form a hollow film tube. The diameter of the die nozzle is about 250 mm, and the temperature of the die head was controlled at about 135°C. The film tube was cooled to a temperature of about 100°C to about 130°C by cold air. The film tube was blown up with air so that the film tube extends outward and expands to become a large cylindrical shape having a diameter of about 1300 mm. The expanded film tube was squeezed and flattened by using two rows of rollers of a molding machine to form a two-layer sheet. The two-layer sheet was gripped to rotate by using take-off rollers, and the rotational speed of the take-off rollers were adjusted so that the take-off linear speed is about 100 m/min. The two-layer sheet was drawn to a cutting device and was cut to form two single-layer films. Finally, each of the two single-layer films was drawn to a double-sided surface coiler. The obtained product has a width of about 2050 mm, a thickness of about 8 µm, a density of about 0.78 g/cm³, and a weight of about 6.24 g/m². In this preparation example, the yield of the mulch film is about 153.5 kg per hour.

### Preparation Example 2

Five materials of inorganic mineral powder, HDPE, LDPE, PLA, and an auxiliary agent were respectively pumped under negative pressure through five different stainless pipes into five different storage tanks for inorganic mineral powder, HDPE, LDPE, PLA, and an auxiliary agent. The formulation comprises about 60 kg inorganic mineral powder, about 22 kg HDPE, about 10 kg LDPE, about 6 kg PLA, and about 2 kg auxiliary agent, and the total weight of the formulation is about 100 kg.

A predetermined amount of each raw material was separately transferred by digitally weighting and controlling five sets of screws, and the five materials were all fed to an inlet of an internal mixer for preparing a composite soft material. The feeds were continuously supplied. The five materials were supplied in a total amount of about 1200 kg per hour. The internal mixer was continuously operating, and the rotational speed of two rotors of the internal mixer was digitally controlled to be about 280 rotations per minute (rpm). In the first stage of the internal mixer, the heating temperature was digitally controlled at about 140°C, and in the second stage of the internal mixer, the heating temperature was digitally controlled at about 160°C. The discharge amount of the composite soft material from the internal mixer was about 1200 kg per hour. The discharge was then fed into a pelletizing machine to form one or more composite pellets having a diameter of about 4 mm and a length of about 3 mm to about 4 mm.

The composite pellets were separately introduced into a mulch film forming extruder, in which the temperature of a screw barrel was adjusted to about 140°C at the first stage, about 145°C at the second stage, and about 150°C at the third to the fifth stages. The composite pellet was continuously extruded by a screw and discharged from the circular die nozzle so as to form a hollow film tube. The diameter of the die nozzle is about 250 mm, and the temperature of the die head was controlled at about 135°C. The film tube was cooled to a temperature of about 100°C to about 130°C by cold air. The film tube was blown up with air so that the film tube extends outward and expands to become a large cylindrical shape having a diameter of about 1300 mm. The expanded film tube was squeezed and flattened by using two rows of rollers of a molding machine to form a two-layer sheet. The two-layer sheet was gripped to rotate by using take-off rollers, and the rotational speed of the take-off rollers were adjusted so that the take-off linear speed is about 120 m/min. The two-layer sheet was drawn to a cutting device and was cut to form two single-layer films. Finally, each of the two single-layer films was drawn to a double-sided surface coiler. The obtained product has a width of about 2050 mm, a thickness of about 7 µm, a density of about 0.743 g/cm³, and a weight of about 5.2 g/m². In this preparation example, the yield of the mulch film is about 153.5 kg per hour.

### Preparation Example 3

Five materials of inorganic mineral powder, HDPE, LDPE, PLA, and an auxiliary agent were respectively pumped under negative pressure through five different stainless pipes into five different storage tanks for inorganic mineral powder, HDPE, LDPE, PLA, and an auxiliary agent. The formulation comprises about 60 kg inorganic mineral powder, about 22 kg HDPE, about 10 kg LDPE, about 6 kg PLA, and about 2 kg auxiliary agent, and the total weight of the formulation is about 100 kg.

A predetermined amount of each raw material was separately transferred by digitally weighting and controlling five sets of screws, and the five materials were all fed to an inlet of an internal mixer for preparing a composite soft material. The feeds were continuously supplied. The five materials were supplied in a total amount of about 1200 kg per hour. The internal mixer was continuously operating, and the rotational speed of two rotors of the internal mixer was digitally controlled to be about 280 rotations per minute (rpm). In the first stage of the internal mixer, the heating temperature was digitally controlled at about 140°C, and in the second stage of the internal mixer, the heating temperature was digitally controlled at about 160°C. The discharge amount of the composite soft material from the internal mixer was about 1200 kg per hour. The discharge was then fed into a pelletizing machine to form a plurality of composite pellets having a diameter of about 4 mm and a length of about 3 mm to about 4 mm.

The composite pellets were separately introduced into a mulch film forming extruder, in which the temperature of a screw barrel was adjusted to about 140°C at the first stage, about 145°C at the second stage, and about 150°C at the third to the fifth stages. The composite pellet was continuously extruded by a screw and discharged from the circular die nozzle so as to form a hollow film tube. The diameter of the die nozzle is about 250 mm, and the temperature of the die head was controlled at about 135°C. The film tube was cooled to a temperature of about 100°C to about 130°C by cold air. The film tube was blown up with air so that the film tube extends outward and expands to become a large cylindrical shape having a diameter of about 1300 mm. The expanded film tube was squeezed and flattened by using two rows of rollers of a molding machine to form a two-layer sheet. The two-layer sheet was gripped to rotate by using take-off rollers, and the rotational speed of the take-off rollers were adjusted so that the take-off linear speed is about 149 m/min. The two-layer sheet was drawn to a cutting device and was cut to form two single-layer films. Finally, each of the two single-layer films was drawn to a double-sided surface coiler. The obtained product has a width of about 2050 mm, a thickness of about 6 µm, a density of about 0.7 g/cm³, and a weight of about 4.2 g/m². In this preparation example, the yield of the mulch film is about 153.9 kg per hour.

It will be apparent to those skilled in the art that various modifications and variations can be made to the structure of the present invention without departing from the scope or spirit of the invention. In view of the foregoing, it is intended that the present invention cover modifications and variations of this invention provided that they fall within the scope of the following claims and their equivalents.

## Claims

1. An agricultural film formulation comprising:
about 40 wt% to about 70 wt% inorganic mineral powder;
about 15 wt% to about 30 wt% high-density polyethylene;
about 8 wt% to about 20 wt% low-density polyethylene; and
about 5 wt% to about 10 wt% biodegradable plastic, based on total weight of the formulation.

2. The agricultural film formulation according to Claim 1, wherein the inorganic mineral powder is selected from the group consisting of calcium carbonate, limestone milling powder, loess milling powder, lime soil milling powder, and combinations thereof.

3. The agricultural film formulation according to either Claim 1 or Claim 2,
wherein the inorganic mineral powder comprises at least about 80% inorganic mineral powder having an average particle size of about 1 µm to about 2 µm.

4. The agricultural film formulation according to any one of Claims 1 to 3,
wherein the inorganic mineral powder comprises about 100% inorganic mineral powder having an average particle size of about 1 µm to about 4 µm.

5. The agricultural film formulation according to any one of Claims 1 to 4,
wherein the high-density polyethylene comprises blown-film grade high-density polyethylene; and/or the low-density polyethylene comprises blown-film grade low-density polyethylene.

6. The agricultural film formulation according to any one of Claims 1 to 5,
wherein the biodegradable plastic is selected from the group consisting of blown-film grade polylactide, blown-film grade polycaprolactone, blown-film grade polyhydroxybutyrate, and combinations thereof.

7. The agricultural film formulation according to any one of Claims 1 to 6 further comprising an auxiliary agent.

8. The agricultural film formulation according to Claim 7, wherein the auxiliary agent is selected from the group consisting of a coupling agent, a slip agent, and a combination thereof.

9. The agricultural film formulation according to any one of Claims 1 to 8, which comprises about 40 wt% to about 65 wt% inorganic mineral powder, about 15 wt% to about 30 wt% high-density polyethylene, about 8 wt% to about 20 wt% low-density polyethylene, about 5 wt% to about 10 wt% polylactide, and about 1 wt% to about 2 wt% auxiliary agent.

10. An agricultural mulch film obtained from the agricultural film formulation according to any of Claims 1 to 9, wherein the agricultural mulch film has a thickness of about 6 µm to about 15 µm and a density of about 0.6 g/cm³ to about 0.85 g/cm³.

11. A method of preparing a mulch film, comprising:
(1) internal mixing the agricultural film formulation according to any of Claims 1 to 9 to form a composite soft material;
(2) pelletizing the composite soft material to be one or more composite pellets;
(3) molding one of the composite pellets to be a film tube;
(4) blowing the film tube so as to allow the film tube to extend outward and expand to a predetermined dimension; and
(5) squeezing and flattening the film tube into the mulch film.

12. The method according to Claim 11,
wherein Step (1) comprises:
(1-1) mixing the ingredients of the agricultural film formulation at a temperature of about 120°C to about 160°C, and
(1-2) heating to a temperature of about 140°C to about 180°C to melt the high-density polyethylene, low-density polyethylene, and the biodegradable plastic at, and internally mixing the melt with the inorganic mineral powder to form the composite soft material; and/or
wherein Step (2) comprises:
(2-1) introducing the composite soft material into a pelletizing machine to form the one or more composite pellets; and/or
wherein Step (3) comprises:
(3-1) introducing one of the composite pellets into an extruder with a circular die nozzle and softening the composite pellet at a temperature of about 120°C to about 170°C, and
(3-2) extruding the softened composite pellet from the circular die nozzle to form the film tube; and/or
wherein Step (4) comprises:
(4-1) cooling the film tube to a temperature of about 100°C to about 130°C, and
(4-2) blowing the cooled film tube so as to allow the film tube to extend outward and expand to become a large cylindrical shape having a diameter of about 4 times to about 8 times the diameter of the circular die nozzle; and/or
wherein Step (5) comprises:
(5-1) squeezing and flattening the extended and expanded film tube by using rollers of a molding machine to form a two-layer sheet, and
(5-2) cutting the two-layer sheet into two single-layer mulch films.

13. The method according to Claim 12, wherein the cooling step is carried out with cold air, and wherein the distance for cooling is about 4 times to about 8 times the diameter of the circular die nozzle.

14. The method according to Claim 12, wherein after Step (5-1), the method further comprises adjusting the thickness of the mulch film by controlling the rotational speed of the rollers.

15. The method according to any of Claims 11 to 14, wherein the mulch film has a thickness of about 6 µm to about 15 µm and a density of about 0.6 g/cm³ to about 0.85 g/cm³.
